(19) **Europäisches Patentamt**
**European Patent Office**
**Office européen des brevets**

(11) **EP 4 714 995 A1**

(12) **EUROPEAN PATENT APPLICATION**
published in accordance with Art. 153(4) EPC

(43) Date of publication:
**25.03.2026 Bulletin 2026/13**

(21) Application number: **24807130.0**

(22) Date of filing: **10.05.2024**

(51) International Patent Classification (IPC):
**C08G 63/64** (2006.01)　**C08G 63/78** (2006.01)

(52) Cooperative Patent Classification (CPC):
**C08G 63/64; C08G 63/78**

(86) International application number:
**PCT/JP2024/017340**

(87) International publication number:
**WO 2024/237178 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 JP 2023081390**

(71) Applicant: **MITSUBISHI GAS CHEMICAL
COMPANY, INC.**
**Chiyoda-ku
Tokyo 100-8324 (JP)**

(72) Inventors:
- **YOKOKAWA, Hinata**
  **Tokyo 125-8601 (JP)**
- **NISHI, Noriyuki**
  **Tokyo 125-8601 (JP)**
- **YOSHIYA, Kohei**
  **Tokyo 125-8601 (JP)**
- **ISOBE, Takehiko**
  **Tokyo 125-8601 (JP)**

(74) Representative: **Müller-Boré & Partner**
**Patentanwälte PartG mbB
Friedenheimer Brücke 21
80639 München (DE)**

(54) **METHOD FOR PRODUCING POLYESTER CARBONATE AND POLYESTER**

(57)　It has been required to develop a new production method capable of controlling the polymerization reactivity of a polyester carbonate resin and a polyester resin. Provided is a method for producing a polyester carbonate or a polyester comprising a structural unit (A) derived from a diol and a structural unit (B) derived from a dicarboxylic acid, the method comprising adjusting the phosphorus atom content in the dicarboxylic acid to be less than 1.3 mass ppm on the basis of the total amount of the dicarboxylic acid.

**EP 4 714 995 A1**

**Description**

TECHNICAL FIELD

The present invention relates to a method for producing a polyester carbonate. The present invention also relates to a method for producing a polyester.

BACKGROUND ART

Dicarboxylic acids (e.g., succinic acid), which are raw materials for polyester carbonate resins and polyester resins, are produced, for example, by a fermentation method that produces a dicarboxylic acid from a fermentable carbohydrate such as glucose through microbial conversion (Patent literature 1), and a method that produces a dicarboxylic acid by hydrogenating maleic anhydride derived from a petroleum raw material (Patent literature 2).
However, the fermentation method, which uses microorganisms for the production, has a problem of unstable quality. On the other hand, the method that uses maleic anhydride as the raw material has a problem of complexity because it requires a multi-step process involving hydrogenation in water, followed by crystallization, filtration, washing, drying, etc. In addition, this method requires repeated purification to produce a target product of higher quality.

CITATION LIST

Patent Literature

Patent literature 1: Japanese Unexamined Patent Application Publication No. 2005-139287
Patent literature 2: Japanese Unexamined Patent Application Publication No. 2001-302781
Patent literature 3: Japanese Unexamined Patent Application Publication No. 2009-221482

SUMMARY OF INVENTION

Technical Problem

Accordingly, dicarboxylic acids, such as succinic acid, that are of high quality useful for industrial applications cannot be produced in large quantities in a stable manner, and unexpected fluctuations in polymerization reactivity may occur between different production lots and manufacturers. These have been the problems. Patent literature 1 mentions the ammonia content in the dicarboxylic acid raw material and Patent literature 3 mentions the sulfur atom content in the dicarboxylic acid raw material as the cause of the fluctuations.
However, the causes of these fluctuations remain unclear, and there is a need for the development of a novel production method that can control the polymerization reactivity of polyester carbonate resins and polyester resins.

Solution to Problem

The present inventors have studied and found that the above problems cannot be solved by the ammonia content and sulfur atom content alone. Therefore, the present inventors considered that there were other factors that could affect the polymerization reactivity. Through intensive study, the present inventors found that the polymerization reactivity of polyester carbonate resins and polyester resins is affected by the presence of phosphorus (P) in the dicarboxylic acid, thereby achieving the present invention.
Thus, the present invention provides the following aspects.

<1> A method for producing a polyester carbonate containing a diol-derived structural unit (A) and a dicarboxylic acid-derived structural unit (B), the method comprising
adjusting the content of phosphorus atoms in the dicarboxylic acid so that it is less than 1.3 mass ppm relative to the total amount of the dicarboxylic acid.
<2> A method for producing a polyester containing a diol-derived structural unit (A) and a dicarboxylic acid-derived structural unit (B), the method comprising
adjusting the content of phosphorus atoms in the dicarboxylic acid so that it is less than 1.3 mass ppm relative to the total amount of the dicarboxylic acid.
<3> The method according to <1> or <2>, the method comprising adjusting the content of phosphorus atoms in the dicarboxylic acid so that it is 0.001 mass ppm or more but less than 1.3 mass ppm.

<4> The method according to any one of <1>-<3>, wherein the total content of sodium and calcium atoms in the dicarboxylic acid is 2 mass ppm or less relative to the total amount of the dicarboxylic acid.

<5> The method according to any one of <1>-<4>, wherein a dicarboxylic acid derived from a biomass resource is used.

<6> A molded body comprising a polyester carbonate or a polyester obtained by the method according to any one of <1>-<5>.

<u>Advantageous Effects of Invention</u>

The present invention can provide a production method that can control the polymerization reactivity of a polyester carbonate derived from a dicarboxylic acid raw material. The present invention can also provide a production method that can control the polymerization reactivity of a polyester derived from a dicarboxylic acid raw material. The present invention can also provide a molded body using the polyester carbonate or polyester.

DESCRIPTION OF EMBODIMENTS

Hereinafter, the present invention will be described in more detail. The description of each component is representative of one embodiment of the present invention, and the present invention is not limited thereto.

Herein, a numerical value range expressed using "-" refers to a range that includes the numerical values before and after the "-" as the lower and upper limit values, respectively. Herein, a lower or upper limit value refers to a range including said lower or upper limit value.

[Raw materials used to produce polyester carbonate]

One aspect of the present invention provides a method for producing a polyester carbonate. The method for producing a polyester carbonate of the present invention uses a polyester as a prepolymer. The polyester is produced using a diol raw material containing a diol-derived structural unit (A) and a dicarboxylic acid raw material containing a dicarboxylic acid-derived structural unit (B). First, these diol and dicarboxylic acid raw materials will be described.

In the following description, the terms "dicarboxylic acid raw material" and "diol raw material" refer to a dicarboxylic acid ingredient and a diol ingredient as raw materials for producing a polyester, respectively.

The term "dicarboxylic acid ingredient" is a generic term for dicarboxylic acids and dicarboxylic acid derivatives such as dicarboxylic acid alkylates.

In one aspect of the present invention, among the dicarboxylic acid raw materials used for the production of a polyester as a prepolymer, examples of aromatic dicarboxylic acid ingredients include terephthalic acid, isophthalic acid, and lower alcohol esters thereof, where terephthalic acid and dimethyl terephthalate are preferred from the viewpoint of polymerizability.

Examples of aliphatic dicarboxylic acid ingredients include dicarboxylic acids such as oxalic acid, succinic acid, glutaric acid, adipic acid, sebacic acid, and dodecanedioic acid, and lower alcohol esters and anhydrides thereof (e.g., succinic anhydride, adipic anhydride).

From the viewpoint of physical properties of the resulting polyester, succinic acid, adipic acid, sebacic acid, dodecanedioic acid, or an anhydride or lower alcohol ester thereof is preferred as the aliphatic dicarboxylic acid ingredient, where succinic acid is particularly preferred.

One of these dicarboxylic acid raw materials may be used alone, or a mixture of two or more of them may be used.

The lower alcohol mentioned above usually means an alcohol with 1-4 carbons.

In one aspect of the present invention, specific examples of the diol raw material used for the production of a polyester as a prepolymer include ethylene glycol, 1,3-propanediol, 2-methyl-1,3-propanediol, neopentyl glycol, 1,4-butanediol, 1,5-pentanediol, 1,6-hexanediol, 1,4-cyclohexanediol, 1,4-cyclohexanedimethanol, and isosorbide.

The diol raw material is preferably ethylene glycol, 1,3-propanediol, or 1,4-butanediol from the viewpoint of physical properties of the resulting polyester, and particularly preferably 1,4-butanediol from the viewpoint of heat resistance.

One of these diol raw materials may be used alone, or a mixture of two or more of them may be used.

While the combination of the dicarboxylic acid raw material and the diol raw material is not particularly limited as long as it can produce a polyester, examples of preferred combination include terephthalic acid and 1,4-butanediol, dimethyl terephthalate and 1,4-butanediol, and succinic acid and 1,4-butanediol. Specifically, the production method of the present invention is suitable for the production of polybutylene terephthalate (PBT) through copolymerization of terephthalic acid and 1,4-butanediol, the production of polybutylene terephthalate (PBT) through copolymerization of dimethyl terephthalate and 1,4-butanediol, and the production of polybutylene succinate (PBS) through copolymerization of succinic acid and 1,4-butanediol.

In producing a polyester, a high-viscosity polyester can easily be obtained by adding a small amount of a trifunctional or higher oxycarboxylic acid, a trifunctional or higher alcohol, a trifunctional or higher carboxylic acid, etc. to the raw material, along with the dicarboxylic acid and diol ingredients. Among these trifunctional or higher polyfunctional compounds, oxycarboxylic acids such as malic acid, citric acid, and fumaric acid are preferable, and malic acid is particularly preferably used. When using a trifunctional or higher polyfunctional compound, the upper limit of the amount thereof is preferably 5 mol%, and more preferably 0.5 mol%, and the lower limit is preferably 0.001 mol%, and more preferably 0.05 mol%, relative to the total dicarboxylic acid ingredient. If the upper limit exceeds this range, gels (unmelted products) are likely to form, and if the lower limit falls below this range, the effect of increasing viscosity is difficult to achieve.

The dicarboxylic acid raw material used in the present invention may be a dicarboxylic acid obtained from a fossil fuel raw material such as petroleum, a biomass resource-derived dicarboxylic acid produced from a biomass resource through a fermentation process, etc., or a combination of these dicarboxylic acids.

In one preferred aspect of the present invention, the dicarboxylic acid raw material is a dicarboxylic acid derived from a biomass resource.

The diol raw material used in the present invention may be a diol obtained from a fossil fuel raw material such as petroleum, a biomass resource-derived diol produced from a biomass resource through a fermentation process, etc., or a combination of these diols.

In one preferred aspect of the present invention, the diol raw material is a diol derived from a biomass resource.

Biomass resources include those converted from the solar energy through photosynthesis of plants and stored in the form of starch, cellulose, etc., the bodies of animals that grow to adults by eating plant matter, and products made by processing plant or animal matter. Specific examples include wood, rice straw, rice bran, old rice, corn, sugarcane, cassava, sago palm, soy pulp, corncobs, tapioca residue, bagasse, vegetable oil residue, potatoes, buckwheat, soybeans, oil and fat, used paper, papermaking residue, marine product residue, livestock waste, sewage sludge, and food waste. Among them, plant resources such as wood, rice straw, old rice, corn, sugarcane, cassava, sago palm, soy pulp, corncobs, tapioca residue, bagasse, vegetable oil residue, potatoes, buckwheat, soybeans, oil and fat, used paper, and papermaking residue are preferred. More preferable examples include wood, rice straw, old rice, corn, sugarcane, cassava, sago palm, potatoes, oil and fat, used paper, and papermaking residue, and the most preferable examples include corn, sugarcane, cassava, and sago palm.

These biomass resources are converted into carbon sources through known pretreatment and saccharification processes, such as chemical treatment with acids, alkalis, etc., biological treatment with microorganisms, and physical treatment, although the methods are not limited to these processes. The processes often include a miniaturization process involving pretreatment such as chipping, grinding, or polishing the biomass resource, and if necessary, further include a pulverization process with a grinder or mill. The miniaturized biomass resource is usually further subjected to pretreatment and saccharification processes to be converted into a carbon source. Specific examples of this method include: acid treatment with a strong acid such as sulfuric acid, nitric acid, hydrochloric acid, or phosphoric acid; a chemical method such as alkali treatment, ammonia freeze steam explosion, solvent extraction, supercritical fluid treatment, and oxidant treatment; physical methods such as fine pulverization, steam explosion, microwave treatment, and electron beam irradiation; and biological methods such as hydrolysis by microorganisms or enzyme treatment.

Examples of carbon sources derived from the above biomass resources usually include fermentable carbohydrates like: hexoses such as glucose, mannose, galactose, fructose, sorbose, and tagatose; pentoses such as arabinose, xylose, ribose, xylulose, and ribulose; di- and poly-saccharides such as pentosan, saccharose, starch, and cellulose; oils and fats such as butyric acid, caproic acid, caprylic acid, capric acid, lauric acid, myristic acid, palmitic acid, palmitoleic acid, stearic acid, oleic acid, linoleic acid, linolenic acid, monoctic acid, arachidic acid, eicosanoic acid, arachidonic acid, behenic acid, erucic acid, docosapentaenoic acid, docosahexaenoic acid, lignoceric acid, and selacholeic acid; and polyalcohols such as glycerol, mannitol, xylitol, and ribitol.

Usually, these carbon sources are used to synthesize dicarboxylic acids and diols derived from biomass resources through a fermentation method by microbial conversion, a chemical conversion method involving reaction processes such as hydrolysis, dehydration, hydration, and oxidation reactions, or a combination of these fermentation and chemical conversion methods.

As described above, the present inventors found that the polymerization reactivity of a polyester carbonate is affected by the presence of phosphorus in the dicarboxylic acid used as the raw material. The production method of the present invention includes adjusting the content of phosphorus atoms in the dicarboxylic acid used as the raw material so that it is less than 1.3 mass ppm relative to the total amount of the dicarboxylic acid (100 mass%) from the viewpoint of controlling polymerization reactivity.

The content of phosphorus atoms in the dicarboxylic acid relative to the total amount of the dicarboxylic acid (100 mass%) is preferably less than 1.3 mass ppm, more preferably 1.2 mass ppm or less, and still more preferably 1.1 mass ppm or less, and also preferably 1.0 mass ppm or less, 0.9 mass ppm or less, 0.8 mass ppm or less, 0.7 mass ppm or less, 0.6 mass ppm or less, 0.5 mass ppm or less, 0.4 mass ppm or less, 0.3 mass ppm or less, 0.2 mass ppm or less, or 0.1 mass ppm or less.

Meanwhile, the lower limit value of the content of phosphorus atoms in the dicarboxylic acid is not particularly limited, but it may be, for example, 0.0001 mass ppm or more, 0.0005 mass ppm or more, or 0.001 mass ppm or more.

In one aspect of the present invention, adjusting the content of phosphorus atoms includes confirming the content of phosphorus atoms in the dicarboxylic acid used as the raw material. The method for confirming the content of phosphorus atoms is described in EXAMPLES below. A case in which the content of phosphorus atoms is less than 1.3 mass ppm, but the content of phosphorus atoms is not confirmed, is also included in "adjusting the content of phosphorus atoms" according to the present invention. In one aspect of the present invention, if the content of phosphorus atoms is 1.3 mass ppm or more, it is preferable to include a treatment that makes the content of phosphorus atoms in the dicarboxylic acid less than 1.3 mass ppm through recrystallization or the like.

In particular, when a biomass resource-derived dicarboxylic acid is used, the dicarboxylic acid may contain sodium, calcium, or the like in addition to phosphorus.

According to the production method of one aspect of the present invention, the contents of such sodium and calcium are preferably low as well. Specifically, the content of sodium atoms in the dicarboxylic acid is preferably 1.0 mass ppm or less, 0.9 mass ppm or less, 0.8 mass ppm or less, 0.7 mass ppm or less, 0.6 mass ppm or less, or 0.5 mass ppm or less relative to the total amount of the dicarboxylic acid (100 mass%).

In addition, the content of calcium atoms in the dicarboxylic acid is preferably 1.0 mass ppm or less, 0.9 mass ppm or less, 0.8 mass ppm or less, 0.7 mass ppm or less, 0.6 mass ppm or less, or 0.5 mass ppm or less relative to the total amount of the dicarboxylic acid (100 mass%).

Moreover, the total content of sodium and calcium atoms in the dicarboxylic acid is preferably 2.0 mass ppm or less, 1.8 mass ppm or less, 1.6 mass ppm or less, 1.4 mass ppm or less, 1.2 mass ppm or less, 1.0 mass ppm or less, 0.9 mass ppm or less, 0.8 mass ppm or less, 0.7 mass ppm or less, 0.6 mass ppm or less, or 0.5 mass ppm or less relative to the total amount of the dicarboxylic acid (100 mass%).

The lower limit values of the content of sodium and/or calcium atoms in the dicarboxylic acid are not particularly limited, but it may be, for example, 0.0001 mass ppm or more, 0.0005 mass ppm or more, or 0.001 mass ppm or more.

The method for adjusting the contents of sodium and calcium atoms in the dicarboxylic acid is the same as the method for adjusting the content of phosphorus atoms.

[Method for producing polyester carbonate]

One aspect of the present invention provides a method for producing a polyester carbonate containing a diol-derived structural unit (A) and a dicarboxylic acid-derived structural unit (B), the method comprising adjusting the content of phosphorus atoms in the dicarboxylic acid so that it is less than 1.3 mass ppm relative to the total amount of the dicarboxylic acid.

The method for producing a polyester carbonate of the present invention only need to comprise adjusting the content of phosphorus atoms in the dicarboxylic acid so that it is less than 1.3 mass ppm, and the method is as described in [Raw materials used to produce polyester carbonate] above.

The polyester carbonate of one aspect of the present invention can be produced, for example, by a stepwise method that includes primary and secondary reactions described below. As a stepwise method for obtaining a polyester carbonate resin, reference can be made, for example, to the methods described in Japanese Unexamined Patent Application Publication Nos. H8-134196 and H8-301999.

(Primary reaction)

A compound containing a diol-derived structural unit (A) and a compound containing a dicarboxylic acid-derived structural unit (B) are subjected to a polycondensation reaction in the presence of a catalyst to obtain a polyester (PE) as a prepolymer.

(Secondary reaction)

The polyester (PE) obtained in the primary reaction and a carbonate diester are subjected to polycondensation reaction in the presence of a catalyst to obtain a polyester carbonate (PEC).

The catalyst used in the primary and secondary reactions may be a basic compound catalyst, a transesterification catalyst, or a mixed catalyst consisting of both.

Examples of the basic compound catalyst include an alkali metal compound, an alkaline earth metal compound, and a nitrogen-containing compound.

As the transesterification catalyst, for example, salts of zinc, tin, zirconium, lead or the like are preferably used alone or in combination. Specific examples include zinc acetate, zinc benzoate, zinc 2-ethylhexanoate, tin(II) chloride, tin(IV) chloride, tin(II) acetate, tin(IV) acetate, dibutyl tin dilaurate, dibutyl tin oxide, dibutyl tin dimethoxide, zirconium acetylacetonate, zirconium oxyacetate, zirconium tetrabutoxide, lead(II) acetate, and lead(IV) acetate.

Examples of the carbonate diester used in the secondary reaction include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among them, diphenyl carbonate is particularly favorable.

Unreacted monomers and carbonate diesters may remain in the polyester carbonate produced by the production method of one aspect of the present invention. The acceptable concentration of the residual monomer is 0 ppm-5,000 ppm, preferably 1 ppm-3,000 ppm. The acceptable concentration of the residual carbonate diester is 0 ppm-5,000 ppm, preferably 1 ppm-1,000 ppm.

Some polyester carbonates produced by the production method of one aspect of the present invention may contain phenol that remains as a by-product of the polycondensation reaction. The acceptable concentration of the residual phenol is 1-5,000 ppm, preferably 10-3,000 ppm. For example, a cyclic dimer composed of succinic acid and 1,4-butanediol may remain. The acceptable concentration of the cyclic dimer is 1.0 mass% or less, preferably 0.6 mass% or less. A pelletized polyester carbonate may be immersed and extracted in a solvent that has low solubility for the polyester carbonate, such as water at a temperature of 20°C to less than 100°C or acetone, to reduce the concentration of the cyclic dimer in the polyester carbonate.

A polyester carbonate produced by the production method of one aspect of the present invention may be mixed with a resin other than polyester (PE) and polyester carbonate (PEC). Examples of such a resin include, but are not limited to, at least one resin selected from the group consisting of a polycarbonate resin, a (meth)acrylic resin, a polyamide resin, a polystyrene resin, a cyclo-olefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. These resins can be those of various known types, and one type of them can be used alone or two or more types of them can be used in combination.

According to the production method of one aspect of the present invention, an antioxidant is preferably added as an additive. While a commercially available product may be used as the antioxidant, for example, it preferably contains at least either one of an acid phenolic antioxidant and a phosphite-based antioxidant.

Examples of the phenolic antioxidant include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6 (1H,3H,5H)-trione, 4,4',4''-(1-methylpropanyl-3-ylidene)tris(6-tert-butyl-m-cresol), 6,6'-di-tert-butyl-4,4'-butylidene di-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate], where pentaerythritol-tetrakis[3-(3,5-di-tert-butyl-4-hydroxyphenyl)propionate] is favorable.

Examples of the phosphite-based antioxidant include 2-ethylhexyl diphenyl phosphite, isodecyldiphenyl phosphite, triisodecyl phosphite, triphenyl phosphite, 3,9-bis(octadecyloxy)-2,4,8,10-tetraoxy-3,9 diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylene-bis(4,6-di-tert-butylphenyl)2-ethylhexyl phosphite, tris(2,4-di-tert-butylphenyl)phosphite, tris(nonylphenyl)phosphite, tetra-C12-15-alkyl (propane-2,2-diylbis(4,1-phenylene))bis(phosphite), and 3,9-bis(2,6-di-tert-butyl-4-methylphenoxy)-2,4,8,10-tetraoxa-3,9-diphosphaspiro[5.5]undecane, where 3,9-bis(2,6-di-tert-butyl-4-methylphenoxy)-2,4,8,10-tetraoxa-3,9-diphosphaspiro[5.5]undecane is favorable.

As the antioxidant, one of the above-mentioned antioxidants may be used alone, or a mixture of two or more of them may be used.

According to the production method of one aspect of the present invention, the amount of the antioxidant added is preferably such that the antioxidant content is 1 ppm-3,000 ppm by weight relative to the total weight of the resulting polyester carbonate. The content of the antioxidant in the resulting polyester carbonate is more preferably 50 ppm-2,500 ppm by weight, still more preferably 100 ppm-2,000 ppm by weight, particularly preferably 150 ppm-1,500 ppm by weight, and even more preferably 200 ppm-1,200 ppm by weight.

According to the production method of one aspect of the present invention, a mold release agent is preferably added as an additive.

Examples of the mold release agent include an ester compound, for example, a glycerol fatty acid ester such as a mono- or di-glyceride of a glycerol fatty acid, a glycol fatty acid ester such as a propylene glycol fatty acid ester and a sorbitan fatty acid ester, a higher alcohol fatty acid ester, and a full ester or mono-fatty acid ester of an aliphatic polyhydric alcohol and an aliphatic carboxylic acid.

When an ester of an aliphatic polyhydric alcohol and an aliphatic carboxylic acid is used as the mold release agent, it may be any of a monoester, full ester, or the like. For example, it may not be a full ester but a monoester or the like.

Specific examples of the mold release agent include the following:

a sorbitan fatty acid ester such as sorbitan stearate, sorbitan laurate, sorbitan oleate, sorbitan trioleate, sorbitan tribehenate, sorbitan stearate, sorbitan tristearate, and sorbitan caprylate;

a propylene glycol fatty acid ester such as propylene glycol monostearate, propylene glycol monooleate, propylene glycol monobehenate, propylene glycol monolaurate, and propylene glycol monopalmitate;

a higher alcohol fatty acid ester such as stearyl stearate;

a glycerol fatty acid ester monoglyceride, including: a monoglyceride such as glycerol monostearate, glycerol monohydroxystearate (e.g., glycerol mono-12-hydroxystearate), glycerol monooleate, glycerol monobehenate, glycerol monocaprylate, glycerol monocaprate, and glycerol monolaurate: and a mono- or di-glyceride such as glycerol mono- or di-stearate, glycerol mono- or di-stearate, glycerol mono- or di-behenate, and glycerol mono- or di-oleate;

an acetylated monoglyceride of a glycerol fatty acid ester such as glycerol diacetomonolaurate;

an organic acid monoglyceride of a glycerol fatty acid ester such as a citric acid ester of a monoglyceride of a fatty acid, a succinic acid ester of a monoglyceride of a fatty acid, and a diacetyl tartaric acid ester of a monoglyceride of a fatty acid; and

a polyglycerol fatty acid ester such as diglycerol stearate, diglycerol laurate, diglycerol oleate, diglycerol monostearate, diglycerol monolaurate, diglycerol monomyristate, diglycerol monooleate, tetraglycerol stearate, decaglycerol laurate, decaglycerol oleate, and polyglycerol polyricinoleate.

According to the production method of one aspect of the present invention, the amount of mold release agent added is preferably such that the mold release agent content is 1 ppm-5,000 ppm by weight relative to the total weight of the resulting polyester carbonate. The content of the mold release agent in the resulting polyester carbonate is more preferably 50 ppm-4,000 ppm by weight, still more preferably 100 ppm-3,500 ppm by weight, particularly preferably 500 ppm-13,000 ppm by weight, and even more preferably 1,000 ppm-2,500 ppm by weight.

According to the production method of one aspect of the present invention, other additives may be added in addition to the above-described antioxidant and mold release agent. Examples include a compounding agent, a catalyst inhibitor, a heat stabilizer, a plasticizer, a filler, a UV absorber, a corrosion inhibitor, a dispersant, an antifoaming agent, a leveling agent, a flame retardant, a lubricant, a dye, a pigment, a bluing agent, a nucleating agent, a clarifying agent (specifically, a sorbitol derivative, a hydroxy fatty acid-based amide, a triaminobenzene-based compound, a nonitol-based compound, various celluloses, etc.), a starch (specifically, corn starch, waxy corn starch, high amylose corn starch, wheat starch, rice starch, potato starch, sweet potato starch, tapioca starch, pea starch, etc.), a lightfast agent (specifically, a hindered amine-based stabilizer such as bis(2,2,6,6-tetramethyl-1-(octyloxy)-4-piperidinyl) decanedioate, a reaction product of 1,1-dimethylethyl hydroperoxide with octane, bis(1,2,2,6,6-pentamethyl-4-piperidyl)[[3,5-bis(1,1-dimethylethyl)-4-hydroxyphenyl]methyl]butylmalonate, bis(1,2,2,6,6-pentamethyl-4-piperidyl)sebacate, methyl 1,2,2,6,6-pentamethyl-4-piperidyl sebacate, bis(2,2,6,6-tetramethyl-4-piperidyl)sebacate, 1-[2-[3-(3,5-di-tert-butyl-4-hydroxyphenyl) propionyloxy]ethyl]-4-[3-(3,5-di-tert-butyl-4-hydroxyphenyl)propionyloxy]-2,2,6,6-tetramethylpiperidine, poly[[6-(1,1,3,3-tetramethylbutyl)amino-1,3,5-triazine-2,4-diyl][(2,2,6,6-tetramethyl-4-piperidyl)imino]hexamethylene {(2,2,6,6-tetramethyl-4-piperidyl)imino}], etc.), an endcapping agent, an inorganic filler (specifically, a silicate such as anhydrous silica, mica, talcum, titanium oxide, calcium carbonate, siliceous earth, allophane, bentonite, potassium titanate, zeolite, sepiolite, smectite, kaolin, kaolinite, glass, limestone, carbon, wollastonite, calcined pearlite, calcium silicate, and sodium silicate; a hydroxide such as aluminum oxide, magnesium carbonate, and calcium hydroxide; and a salt such as ferric carbonate, zinc oxide, iron oxide, aluminum phosphate, and barium sulfate).

The amounts of additives other than antioxidants and mold release agents added according to the production method of one aspect of the present invention are such that the content of other additives in the resulting polyester carbonate is, but not limited to, preferably 10 ppm to 5.0% by weight, more preferably 100 ppm to 2.0% by weight, and still more preferably 1,000 ppm to 1.0% by weight.

The additives mentioned above may adversely affect the transmissivity and should not be added in excess. For example, the total amount added is within the range mentioned above.

[Raw materials used to produce polyester]

One aspect of the present invention provides a method for producing a polyester. The polyester is produced using a diol raw material containing a diol-derived structural unit (A) and a dicarboxylic acid raw material containing a dicarboxylic acid-derived structural unit (B). The descriptions of the diol raw material and the dicarboxylic acid raw material in [Raw materials used to produce polyester carbonate] above are also applicable to this aspect.

[Method for producing polyester]

One aspect of the present invention provides a method for producing a polyester containing a diol-derived structural unit (A) and a dicarboxylic acid-derived structural unit (B), the method comprising adjusting the content of phosphorus atoms in the dicarboxylic acid so that it is less than 1.3 mass ppm relative to the total amount of the dicarboxylic acid.

The method for producing a polyester of the present invention only need to comprise adjusting the content of phosphorus atoms in the dicarboxylic acid so that it is less than 1.3 mass ppm, and the description of the method in [Raw materials used to produce polyester carbonate] above is applicable to this aspect.

A polyester of one aspect of the present invention can be produced by subjecting a compound containing a diol-derived structural unit (A) and a compound containing a dicarboxylic acid-derived structural unit (B) to a polycondensation reaction in the presence of a catalyst. For the method for producing a polyester, which comprises the aforementioned polycondensation reaction, reference can be made, for example, to the methods described in Japanese Unexamined Patent Application Publication Nos. H8-134196 and H8-301999.

The catalyst used in the polycondensation reaction may be a basic compound catalyst, a transesterification catalyst, or a mixed catalyst consisting of both.

Examples of the basic compound catalyst include an alkali metal compound, an alkaline earth metal compound, and a nitrogen-containing compound.

As the transesterification catalyst, for example, salts of zinc, tin, zirconium, lead or the like are preferably used alone or in combination. Specific examples include zinc acetate, zinc benzoate, zinc 2-ethylhexanoate, tin(II) chloride, tin(IV) chloride, tin(II) acetate, tin(IV) acetate, dibutyl tin dilaurate, dibutyl tin oxide, dibutyl tin dimethoxide, zirconium acetylacetonate, zirconium oxyacetate, zirconium tetrabutoxide, lead(II) acetate, and lead(IV) acetate.

Unreacted monomers may remain in the polyester produced by the production method of one aspect of the present invention. The acceptable concentration of the residual monomer is 0 ppm-5,000 ppm, preferably 1 ppm-3,000 ppm.

For example, a cyclic dimer composed of succinic acid and 1,4-butanediol may remain in the polyester produced by the production method of one aspect of the present invention. The acceptable concentration of the cyclic dimer is 1.0 mass% or less, preferably 0.6 mass% or less. A pelletized polyester may be immersed and extracted in a solvent that has low solubility for the polyester, such as water at a temperature of 20°C to less than 100°C or acetone, to reduce the concentration of the cyclic dimer in the polyester.

A polyester produced by the production method of one aspect of the present invention may be mixed with a resin other than polyester (PE). Examples of such a resin include, but are not limited to, at least one resin selected from the group consisting of a polycarbonate resin, a (meth)acrylic resin, a polyamide resin, a polystyrene resin, a cyclo-olefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. These resins can be those of various known types, and one type of them can be used alone or two or more types of them can be used in combination.

According to the production method of one aspect of the present invention, an antioxidant, a mold release agent, and, if necessary, other additives are preferably added as additives. The description of these additives in [Method for producing polyester carbonate] above is also applicable to this aspect.

[Applications of polyester carbonate and polyester]

Since the polyester carbonate and polyester of one aspect of the present invention, which use biomass resource-derived raw materials, are easily decomposed by microorganisms in soil, compost, seawater, rivers, lakes, and swamps, they can be widely used, for example, when recycling is difficult. They also have excellent moldability and thus can be processed into various molded bodies, such as films, sheets, laminates, fibers, non-woven fabrics, yarns, and laminated bodies.

The following are examples of specific applications that could be implemented.

Specific examples include various bags such as shopping bags, packaging materials for magnetic tape cassette products such as video and audio tapes, flexible disk packaging materials, platemaking materials, packaging bands, adhesive tapes, tapes, yarns, cups, trays, cartons, lunch boxes, containers for prepared foods, food and confectionery packaging materials, food wrapping materials, inner coated materials for food and drink packages, shrink film for PET bottles, trays for fresh foods, containers and lunch boxes for fast foods, trash bags, cups, plates, chopsticks, spoons, forks, straws, wrapping materials for cosmetics and fragrances, plastic bags, diapers, sanitary napkins, wrapping materials for drugs, packaging materials for pharmaceuticals, packaging materials for surgical patches applied to stiff shoulders, sprains, etc., various packaging materials for foods, electronics, medical, chemicals, cosmetics, etc., parts of artificial hair and wig, artificial turf, body bags, and the like. Heat sealing is also possible if the product has a film shape.

Agricultural mulch films are used to cover soil surfaces to retain soil heat, prevent weed growth, prevent pest damage, and diffuse the sunlight by the fine unevenness made on the film surface, for the purposes of creating a suitable environment for growing vegetables and fruits, raising seedlings, and the like. Films that are spread outside the greenhouse are used for the purposes of preventing fog and haze, improving heat retention, preventing dust, and the like.

Examples of other agricultural materials include materials used in the agricultural, civil engineering, and fishery fields, such as multipurpose films, pots and strings for plants, coating materials for fertilizers, slow-release coating materials, horticultural films, wrapping films for agricultural chemicals, greenhouse films, fertilizer bags, pots for transplanting seedlings, seedling pots, waterproof sheets, sandbags, construction films, weed control sheets, vegetation nets made of tapes and yarns, water retaining films for wasteland and desert greening, sandbags, vegetation nets, fishing lines, fishing nets, seaweed nets, and pseudo bait. Other applications include trash bags and compost bags.

For medical and hygiene products, it can be used as medical materials for sutures, bandages, etc. and as hygiene materials for paper diapers, parts of sanitary products (polymer absorbent, waterproof film), etc.

It can also be used as disposable products such as leisure goods for golf, fishing, and marine sports, and as water treatment materials such as sedimentation agents, dispersants, and detergents.

[Physical properties of polyester carbonate and polyester]

A polyester carbonate obtained by the production method of one aspect of the present invention preferably has a weight average molecular weight (Mw) of 150,000 or more, more preferably 155,000 or more, and still more preferably 160,000 or more. In addition, the weight average molecular weight (Mw) is preferably 300,000 or less, more preferably 280,000 or less, and still more preferably 260,000 or less.

Herein, a weight average molecular weight (Mw) refers to a polystyrene-equivalent weight average molecular weight, which can be measured by the method described in EXAMPLES below.

In one aspect of the present invention, the polyester, including an aspect as a prepolymer for producing a polyester carbonate, preferably has a number average molecular weight (Mn) of more than 1,100, more preferably 1,150 or more, still more preferably 1,200 or more, and particularly preferably 1,300 or more. In addition, the number average molecular weight (Mn) is preferably 2,500 or less, and more preferably 2,000 or less.

Herein, a number average molecular weight (Mn) refers to a polystyrene-equivalent number average molecular weight, which can be measured by the method described in EXAMPLES below.

In one aspect of the present invention, the content of terminal hydroxyl groups in the polyester, including an aspect as a prepolymer for producing a polyester carbonate, is preferably 3.20 mass% or less, more preferably 3.15 mass% or less, and still more preferably 3.10 mass% or less.

Herein, the content of terminal hydroxyl groups can be measured by the method described in EXAMPLES below.

EXAMPLES

Hereinafter, the present invention will be described by way of examples, although the present invention should not be limited in any way to these examples. The values in the examples were measured using the following methods or instruments.

<Methods for measuring various physical properties and characteristics>

(1) Concentration of phosphorus atoms in dicarboxylic acid

The phosphorus ionic species were qualitatively analyzed by ion chromatography-mass spectrometry (IC-MS), and the concentration of phosphorus atoms was quantified by inductively coupled plasma-mass spectrometry (ICP-MS), assuming that all phosphorus atoms in the dicarboxylic acid were derived from phosphate ions.

(Qualitative analysis of phosphorus ionic species)

Instrument (IC-MS): Dionex™ ICS-2100 and ISQ™ EC single quadrupole mass spectrometer, from Thermo Fisher Scientific Inc.
Columns: IonPac AS18
Eluent: KOH 10-90 mM (gradient)
Column temperature: 40°C
Sample injection amount: 25 $\mu$L
Sample: Solution diluted with ultrapure water by 250-fold was used.
Phosphorus ionic species: $PO_3^{3-}$, $PO_4^{3-}$, $P_2O_7^{4-}$
(Quantification of phosphorus atoms)
Instrument (ICP-MS): Agilent 8800 triple quadrupole, from Agilent Technologies, Inc.
Sample: Dicarboxylic acid was weighed into a quartz container, to which nitric acid was added. The container was then sealed and irradiated with microwaves to cause thermal decomposition. The volume was then fixed with ultrapure water to give a test solution.
Detection limit: 0.001 ppm in terms of phosphorus atom

(2) Concentrations of sodium and calcium atoms in dicarboxylic acid

Semi-quantitative analysis was performed by ICP-MS.

Instrument: Agilent 8800 triple quadrupole ICP-MS, from Agilent Technologies, Inc.
Preparation of sample: Succinic acid was weighed into a quartz container, to which nitric acid was added. The container was then sealed and irradiated with microwaves to cause thermal decomposition. The volume was then fixed with ultrapure water to give a test solution.
Detection limit: 0.001 ppm in terms of sodium and calcium atoms

(3) Content of terminal hydroxyl groups

Calculated from NMR analysis.
Instrument: AVNEO500, from Bruker
Solvent: Deuterated chloroform
Method of analysis: The content of terminal hydroxyl groups was calculated from the integral value of $\sigma3.7$, which indicates the terminal hydroxyl groups, and the integral value of $\sigma4.2$, which indicates the ester bond of succinic acid, according to the following formula.

Degree of polymerization n = ((Integral value of $\sigma4.2$ - Integral value of $\sigma3.7$)/Integral value of $\sigma3.7$) + 1

$$\text{Theoretical molecular weight } M = n \times 172.17 + 90.12$$

$$\text{Terminal hydroxyl group content (mass\%)} = (16 + 1.008) \times 2/M \times 100$$

The smaller the content of terminal hydroxyl groups, the more the reaction has progressed.

(4) Polystyrene-equivalent weight average molecular weight (Mw) and number average molecular weight (Mn)

Analyzed by GPC.
Instrument: High performance GPC HLC-8320 GPC, from Tosoh Corporation
Columns: SuperMultiporeHZ-M (4.6 mm I.D. $\times$ 150 mm) GPC columns, from Tosoh Corporation (3 columns used in series)
Flow rate: 0.35 mL/min
Eluent: Chloroform
Concentration of sample: 0.2 w/v%
Detection unit: Blythe differential refractometer (RI Detector)

(Example 1)

49.6066 g of biomass resource-derived succinic acid (from Shandong Lantian Biotechnology Co., Ltd., phosphorus atom content = 0.2 ppm) as a raw material, 53.0000 g of 1,4-butanediol (from Mitsubishi Chemical Corporation), and 2 mg of Zr(acac)$_4$ (from FUJIFILM Wako Pure Chemical Corporation) as a catalyst were placed in a 300 ml glass flask equipped with a stirrer, a thermometer, a glass tube, and a fraction receiver to allow reaction at a temperature of 225°C for 1 hour in a nitrogen atmosphere, and water was drained. Subsequently, dehydration reaction was allowed to proceed by aging at a pressure reduction degree of 200-20 hPa for 2 hours and 30 minutes. Furthermore, the pressure reduction degree was gradually increased to a final pressure of 1 hPa or less, and water and 1,4-butanediol were further distilled out. Partial sampling at 4 hours of reaction gave a number average molecular weight of 1,300 and a terminal hydroxyl group content of 2.93 mass%. The reaction was terminated after a total reaction time of 4 hours. The resulting polyester had a number average molecular weight of 2,000, a terminal hydroxyl group content of 2.17 mass%, and an acid value of 0.43 KOHmg/g. The physical properties of the resulting polyester are shown in Table 1.

The succinic acid used in the above reaction contained, in addition to phosphorus atoms, 0.3 ppm sodium atoms and 0.2 ppm calcium atoms, for a total of 0.5 ppm.

(Example 2)

A polyester was obtained in the same manner as in Example 1, except that 0.11 mg of phosphoric acid was added to 49.6066 g of biomass resource-derived succinic acid as a raw material and that the phosphorus atom content in the succinic acid was 0.7 ppm.

The physical properties of the polyester sampled at 4 hours of reaction are shown in Table 1.

(Examples 3-4)

Polyesters were obtained in the same manner as in Example 2, except that the amount of phosphoric acid added to biomass resource-derived succinic acid as a raw material and the phosphorus atom content in the succinic acid were as shown in Table 1.

The physical properties of the polyesters sampled at 4 hours of reaction are shown in Table 1.

(Comparative example 1)

A polyester was obtained in the same manner as in Example 1, except that succinic acid shown in Table 1 was used as biomass resource-derived succinic acid.

The physical properties of the polyester sampled at 4 hours of reaction are shown in Table 1.

The succinic acid used in Comparative example 1 contained, in addition to phosphorus atoms, 0.4 ppm sodium atoms and 0.2 ppm calcium atoms, for a total of 0.6 ppm.

(Comparative examples 2-3)

Polyesters were obtained in the same manner as in Example 2, except that the amount of phosphoric acid added to biomass resource-derived succinic acid as a raw material and the phosphorus atom content in the succinic acid were as shown in Table 1.

The physical properties of the polyesters sampled at 4 hours of reaction are shown in Table 1.

(Reference example 1)

Polymerization was carried out in the same manner as in Example 1, except that petroleum-derived succinic acid (from Nippon Shokubai Co., Ltd. phosphorus atom content = below detection limit) was used as succinic acid.

The physical properties of the polyester sampled at 4 hours of reaction are shown in Table 1.

(Example 5)

25 g of the polyester obtained in Example 1 was placed in a 100 ml glass flask equipped with a stirrer, a thermometer, a glass tube, and a fraction receiver, and 3.4834 g of diphenyl carbonate and 1 mg of zinc acetate as a catalyst were added. The reaction was carried out for 4.5 hours at a temperature of 225°C with a stepwise reduction in pressure to a final pressure reduction degree of 1 hPa or less, while removing phenol. The polyester carbonate obtained by releasing pressure reduction with nitrogen was a colorless resin with no gelation and a weight average molecular weight (Mw) of 206,000.

[Table 1]

Table 1

|  | Source of succinic acid | Phosphorus atom content in succinic acid [ppm] | Amount of phosphorus atom added [ppm] | Total phosphorus atom content in succinic acid [ppm] | Content of hydroxyl groups [mass %] | Number average molecular weight [Mn] |
|---|---|---|---|---|---|---|
| Example 1 | Biomass | 0.2 | 0.0 | 0.2 | 2.93 | 1,400 |
| Example 2 | Biomass | 0.2 | 0.5 | 0.7 | 2.98 | 1,400 |
| Example 3 | Biomass | 0.2 | 0.8 | 1.0 | 2.87 | 1,400 |
| Example 4 | Biomass | 0.2 | 0.9 | 1.1 | 3.08 | 1,300 |
| Comparative example 1 | Biomass | 2.0 | 0.0 | 2.0 | 3.25 | 1,100 |
| Comparative example 2 | Biomass | 0.2 | 1.1 | 1.3 | 3.44 | 1,000 |
| Comparative example 3 | Biomass | 0.2 | 39.0 | 39.2 | 3.55 | 900 |
| Reference example 1 | Petroleum | 0.0 | 0.0 | 0.0 | 2.81 | 1,500 |

As shown in Table 1, Examples 1-4, in which the total phosphorus atom content in succinic acid, i.e., dicarboxylic acid, was less than 1.3 mass ppm, had a smaller hydroxyl group content than Comparative Examples 1-3, in which the phosphorus atom content was 1.3 mass ppm or more, suggesting that the reaction progressed more. Furthermore, the polyesters of Examples 1-4 had larger number average molecular weights than those of Comparative Examples 1-3, suggesting that they had higher mechanical strengths.

Thus, the polymerization reactivity could be controlled by adjusting the content of phosphorus atoms in dicarboxylic acid to less than 1.3 mass%.

**Claims**

1.  A method for producing a polyester carbonate containing a diol-derived structural unit (A) and a dicarboxylic acid-derived structural unit (B), the method comprising
    adjusting the content of phosphorus atoms in the dicarboxylic acid so that it is less than 1.3 mass ppm relative to the total amount of the dicarboxylic acid.

2.  A method for producing a polyester containing a diol-derived structural unit (A) and a dicarboxylic acid-derived structural unit (B), the method comprising
    adjusting the content of phosphorus atoms in the dicarboxylic acid so that it is less than 1.3 mass ppm relative to the total amount of the dicarboxylic acid.

3.  The method according to claim 1 or 2, the method comprising adjusting the content of phosphorus atoms in the dicarboxylic acid so that it is 0.001 mass ppm or more but less than 1.3 mass ppm.

4.  The method according to any one of claims 1-3, wherein the total content of sodium and calcium atoms in the dicarboxylic acid is 2 mass ppm or less relative to the total amount of the dicarboxylic acid.

5.  The method according to any one of claims 1-4, wherein a dicarboxylic acid derived from a biomass resource is used.

6.  A molded body comprising a polyester carbonate or a polyester obtained by the method according to any one of claims 1-5.

## INTERNATIONAL SEARCH REPORT

| | International application No. |
|---|---|
| | **PCT/JP2024/017340** |

**A. CLASSIFICATION OF SUBJECT MATTER**

*C08G 63/64*(2006.01)i; *C08G 63/78*(2006.01)i
FI:   C08G63/64; C08G63/78

According to International Patent Classification (IPC) or to both national classification and IPC

**B. FIELDS SEARCHED**

Minimum documentation searched (classification system followed by classification symbols)

C08G63/64; C08G63/78; C08G64/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-302781 A (MITSUBISHI GAS CHEMICAL COMPANY, INC.) 31 October 2001 (2001-10-31) | 1-2, 4, 6 |
| | claims, paragraphs [0004]-[0005], [0043]-[0048] | |
| A | | 3, 5 |
| A | JP 2007-197652 A (MITSUBISHI CHEMICAL CORPORATION) 09 August 2007 (2007-08-09) | 1-6 |
| | entire text | |
| A | JP 2010-7087 A (MITSUBISHI CHEMICAL CORPORATION) 14 January 2010 (2010-01-14) | 1-6 |
| | entire text | |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 June 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017340**

| Patent document cited in search report | | | Publication date (day/month/year) | Patent family member(s) | | | Publication date (day/month/year) |
|---|---|---|---|---|---|---|---|
| JP | 2001-302781 | A | 31 October 2001 | US | 2003/0078364 | A1 | |
| | | | | claims, paragraphs [0004], [0048]-[0062] | | | |
| | | | | WO | 2001/083581 | A1 | |
| | | | | EP | 1277779 | A1 | |
| JP | 2007-197652 | A | 09 August 2007 | US | 2009/0171037 | A1 | |
| | | | | entire text | | | |
| | | | | JP | 2009-41036 | A | |
| | | | | JP | 2009-79057 | A | |
| | | | | JP | 2009-215564 | A | |
| | | | | JP | 2009-221482 | A | |
| | | | | JP | 2013-79395 | A | |
| | | | | JP | 2006-321997 | A | |
| | | | | JP | 2007-197653 | A | |
| | | | | JP | 2007-197654 | A | |
| | | | | JP | 2009-77719 | A | |
| | | | | JP | 2009-215565 | A | |
| | | | | JP | 2006-321996 | A | |
| | | | | JP | 2006-321995 | A | |
| | | | | JP | 2006-321994 | A | |
| | | | | JP | 2006-328379 | A | |
| | | | | US | 2011/0009531 | A1 | |
| | | | | US | 2011/0288207 | A1 | |
| | | | | US | 2013/0030145 | A1 | |
| | | | | WO | 2006/115226 | A1 | |
| | | | | EP | 1882712 | A1 | |
| | | | | EP | 2204396 | A1 | |
| | | | | EP | 2365017 | A2 | |
| | | | | EP | 2366726 | A2 | |
| | | | | EP | 2366727 | A2 | |
| | | | | EP | 2402383 | A2 | |
| | | | | CN | 101163729 | A | |
| | | | | CN | 103172840 | A | |
| | | | | CN | 103183812 | A | |
| | | | | CN | 103183813 | A | |
| JP | 2010-7087 | A | 14 January 2010 | US | 2006/0155100 | A1 | |
| | | | | entire text | | | |
| | | | | JP | 2005-2331 | A | |
| | | | | US | 2007/0093636 | A1 | |
| | | | | WO | 2004/104067 | A1 | |
| | | | | EP | 1640397 | A1 | |
| | | | | CN | 1826366 | A | |
| | | | | CN | 101215371 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139287 A
- JP 2001302781 A
- JP 2009221482 A
- JP H8134196 A
- JP H8301999 A